# EUROPEAN PATENT APPLICATION

(11) **EP 4 529 962 A1**
(43) Date of publication of application: **02.04.2025**
(21) Application number: 24199544.8
(22) Date of filing: 10.09.2024
(51) Int. Cl.: A63F 13/5258, A63F 13/525

(54) **SIGN LANGUAGE IN GAMES**

(30) Priority: 28.09.2023 GB 202314903
(71) Applicant: Sony Interactive Entertainment Inc., Tokyo 108-0075 (JP)
(72) Inventor: GUPTA, Rajeev, London, W1F 7LP (GB); JENABZADEH, Mandana, London, W1F 7LP (GB); DIXON, Alex, London, W1F 7LP (GB); HUME, Oliver, London, W1F 7LP (GB); O'SULLIVAN, Damian, London, W1F 7LP (GB); LU, Hubert, London, W1F 7LP (GB)
(74) Representative: D Young & Co LLP

(57) **Abstract**

An entertainment device (101), method and computer program, the entertainment device comprising processing circuitry (206) to process a game state of a game and to generate, based on a plurality of game assets, an image of a scene, and output circuitry (204) to output the image for display. The processing circuitry is configured to determine, based on the plurality of game assets, whether the scene comprises at least one character communicating using sign language, to adjust the generation of the image in dependence on whether the scene comprises the at least one character communicating using sign language.

## Description

The present technique relates to the field of video games.

Improving accessibility of video games is important and increasingly of interest to video game designers, as well as to other parts of the industry. One consideration for improving accessibility relates to improving video game experiences for players who communicate using sign language, which may include deaf and hard of hearing players. With this in mind, some game designers may opt to include one or more in-game characters (e.g. non-player characters, NPCs) who communicate using sign language (e.g. as well as or even instead of using speech).

Examples of the present technique aim to facilitate and improve the implementation of signing characters in games.

Examples of the present technique are set out in the claims.

Embodiments of the present technique will now be described by way of example with reference to the accompanying drawings, in which:
Figure 1 illustrates an example entertainment system;
Figures 2 to 4 illustrate examples of images generated based on game assets;
Figures 5 and 6 are flow diagrams illustrating examples of methods of generating an image based on game;
Figure 7 is a flow diagram illustrating an example of a method of adjusting generation of an image in response to detecting that a scene includes at least one character using sign language; and
Figure 8 illustrates use of a camera to detect sign language used by a player.

Various methods are described in this application. It will be appreciated that any of these methods can, in some examples, be implemented by a computer executing instructions of a computer program. Such a computer program can be stored on a computer-readable storage medium, such as a transitory medium or a non-transitory medium.

As noted above, game designers may design games to include one or more characters communicating using sign language. For this communication using sign language to be understood by a player, at least the hands (and often also the entire upper body, including the face) of the signing character need to be visible on screen. However, this may not always be the case in all scenes of a video game. For example, the video game may include cut scenes which involve displaying images which do not include the character's hands - for example, such scenes could include moments where the image contains a zoomed-in view of a character's face (thus not showing their hands), or the image may not include the character at all (e.g. if the signing character is providing a voiceover or commentary for another scene). One solution to this issue would be for any cut scenes in a game to be developed such that a signing character's hands remain visible throughout the scene. However, this removes some of the creative freedom available to game designers, which is not ideal.

A similar issue can arise when one or more characters in a video game communicate using sign language during gameplay (e.g. outside of cut scenes). In many video games, the player has control over the "camera", allowing them to "look around" a scene as they wish. The inventors realised that this could pose a problem when a character is communicating using sign language, because the player may control the camera such that they effectively "look away" from the signing character's hands, thus making it difficult to interpret the signing character's signs. While, in such situations, the player is likely to have the ability to adjust the camera angle themselves to ensure that they can see the signing character's hands, this places a burden on the player, which is not ideal. Moreover, in some situations a player may have difficulty controlling the camera with the accuracy and/or precision necessary to keep the signing character's hands in view - indeed, it is relatively common for new players to struggle with this aspect of playing games. In addition, there may be situations in a game where the player is expected to focus on a particular part of the scene that doesn't include the signing character - for example, the player may be performing a task while being assisted by a signing character.

Thus, the present technique aims to solve the above problems in order to improve the implementation of signing characters in video games.

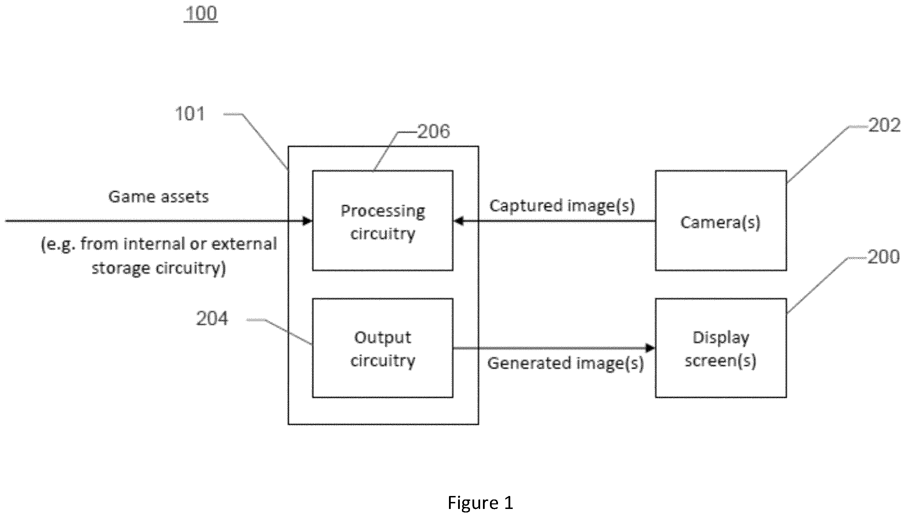

Figure 1 is an illustration of an example entertainment system 100, which comprises an entertainment device 101, one or more display screens 200 and one or more cameras 202. The one or more display screens 200 are arranged to display images (e.g. moving images) output by output circuitry 204 of the entertainment device 101, and could include one or more HMDs and/or one or more other types of display device. The output circuitry 204 may include A/V ports and/or data ports.

The entertainment device 101 comprises processing circuitry 206, which may include CPU and/or GPU. The processing circuitry 206 is configured to process a game state of a game (e.g. a video game) and to generate, based on a plurality of game assets, an image of a scene. For example, the processing circuitry may read a plurality of game asses from internal or external storage circuitry (e.g. from an SSD or via data ports or optical drive). The game assets may, for example, include files and/or resources to be used by the processing circuitry to run the game. They can include information describing 3D models, environments, textures and sound effects, for example. The processing circuitry can then use these game assets - in combination with signals received from one or more controllers (e.g. handheld controllers), the one or more cameras, and any other input devices - to generate images, audio and other outputs to be output by the output circuitry 204 to the display screen(s) and, optionally, other devices such as speakers. Hence, the output circuitry 204 outputs the image(s) for display.

As explained above, game designers may include, in a game, one or more characters communicating using sign language. Therefore, with this in mind, the processing circuitry 206 is configured to determine, based on the plurality of game assets, whether the scene comprises at least one character communicating using sign language, and to adjust the generation of the image in dependence on whether the scene comprises the at least one character communicating using sign language.

In a particular example, the processing circuitry is responsive to determining that the scene comprises the at least one character communicating using sign language to adjust the generation of the image in dependence on whether communication by the at least one character as displayed in the image is determined to be understandable without use of audible cues. In other words, the processing circuitry may generate the image in consideration of whether a person who is deaf or hard of hearing would be able to understand the communication by the at least one character.

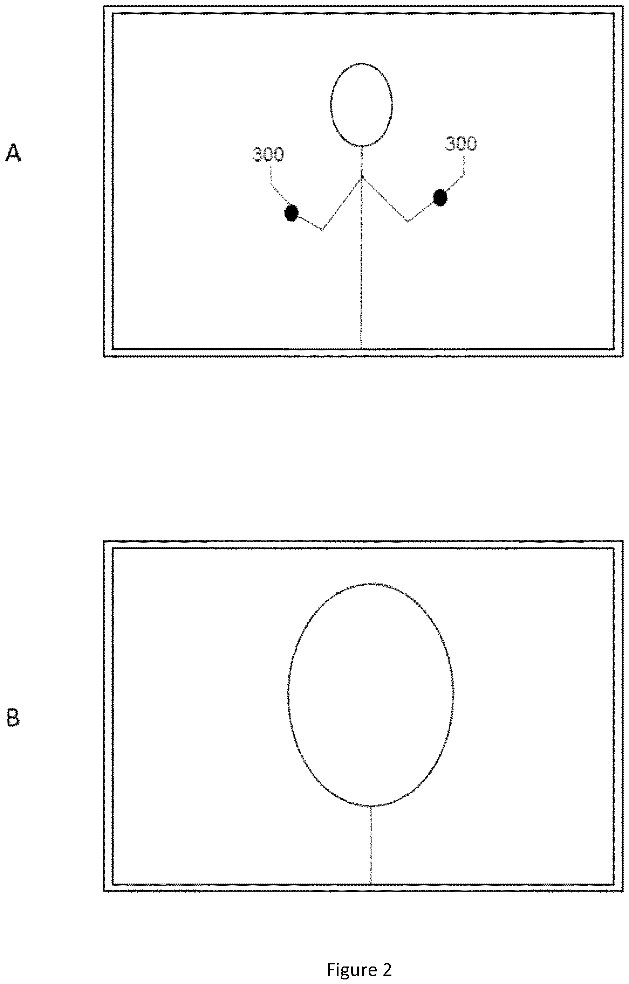

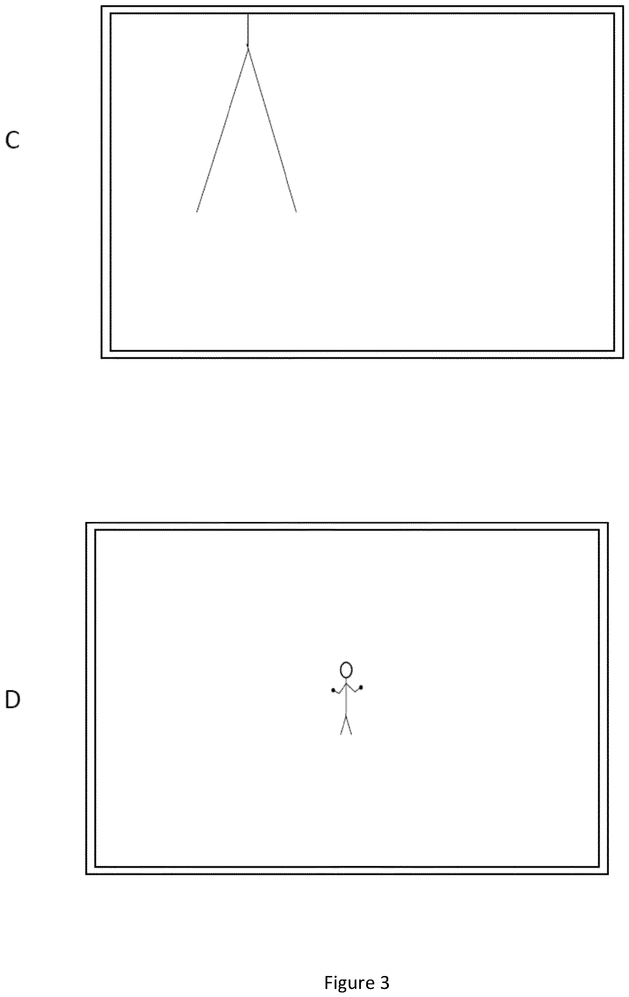

For example, referring to "A" in Figure 2, communication using sign language typically relies on use of one or both of a person's hand or hands 300. If the character's hands are not visible - for example, as shown in the image "B" in Figure 2 or in the image "C" of Figure 3 - this can impact the ability of a player to understand the communication by that character. Similarly, if the character's hands are visible by too small or far away (as shown in image "D" of Figure 3), this may also impact the ability of a player to interpret the character's sign language communication.

To address this potential issue, the processing circuitry is, in some examples of the present technique, responsive to determining that the scene comprises the at least one character communicating using sign language to identify at least one hand 300 of the at least one character communicating by sign language. The processing circuitry can then adjust the generation of the image in dependence on the identification of the at least one hand. This is an example of adjusting the generation of the image in dependence on whether communication by the at least one character as displayed in the image is determined to be understandable without use of audible cues.

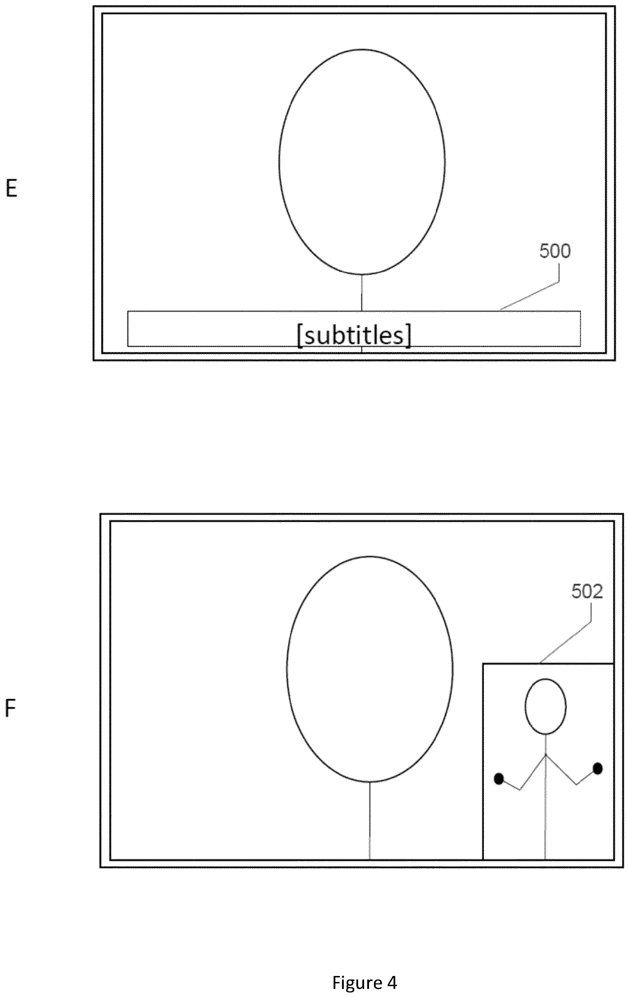

There are multiple different ways in which the generation of the image can be adjusted. For example, the image may be adjusted to ensure that the character's hands are shown in the image - for example, the image could be adjusted to "zoom out" from a close up of the character's face (e.g. to move from image B to image A in Figure 2), to or "pan" from another position (e.g. to move from image C in Figure 4 to image A in Figure 2), or to "zoom in" from a distance shot to more clearly show the character's hands (e.g. to move from image D in Figure 2 to image A in Figure 2). Such movements can bring the character's hands back into the image (and/or allow the hands to be more clearly displayed), allowing a player viewing the image to understand the character's sign language.

Another example of how the generation of the image can be adjusted is to add alternative visual cues to the image, which provide a visual representation of the character's communication. For example, as shown in "E" of Figure 4, subtitles 500 could be displayed in the image, the subtitles representing the character's communication in text format. Hence, the processing circuitry may be responsive to determining that the scene comprises the at least one character communicating using sign language to adjust the generation of the image to include, as the alternative visual cues, subtitles representing the communication of the at least one character.

As another example, as shown in "F" of Figure 4, an overlay 502 is provided, showing a sign language interpreter that performs sign language representing the character's communication. Hence, the processing circuitry is responsive to determining that the scene comprises the at least one character communicating using sign language to adjust the generation of the image to include, as the alternative visual cues, an interpreting character performing the sign language. Subtitles and a sign language interpreter are both examples of alternative visual representations which can be included in the generated image when the signing character's hands are not visible.

Finally, it will be appreciated that in particular for first-person perspective games and VR games, the user will have the expectation that they are in control of the virtual viewpoint, and so unexpected panning or zooming may disorient or induce nausea. Hence a further alternative or additional option is for the signing character to move within the existing (or adjusted) viewpoint to make the signing visible. For example the character could turn to face the virtual viewpoint, and/or walk into view to that at least their hand(s) were visible to the user. Optionally this could be done in advance of them starting to sign. Hence for example when a character is not signing, they may talk to the player from close up, only showing head and shoulders, but when they are in a signing mode, they may step back a metre in-game so that their hands are also visible within the same field of view.

Hence more generally the processing circuitry of the system may be configured to adjust the generation of the image by moving the character within the virtual environment toward a position where at least one hand of the character is visible within the generated image. This may occur over a succession of images as a function of the character's normal mode(s) of movement and animation.

In this case, then optionally the system can detect whether this is a practical option; for example if the user is running or changing viewpoint rapidly (e.g. during a gunfight), or the relevant character is a long way away and would have to navigate a path to reach useful visibility that would delay the start of the dialogue by more than a predetermined threshold amount, then the system may instead revert to other options described herein such as subtitles or an overlay, as per 'E' and `F' mentioned herein.

Hence, the processing circuitry in examples of the present technique is responsive to determining that the scene comprises the at least one character communicating using sign language to adjust the generation of the image to include the at least one hand of the at least one character and/or alternative visual cues representing the communication of the at least one character.

The alternative visual cues may be based on game assets provided specifically for this purpose - for example, the game assets could include information indicative of a translation of the sign language used by the character into at least one other language form (e.g. into a written language), and this translated form could be used to generate the alternative visual cues. However, in other examples, the processing circuitry is responsive to determining that the scene comprises the at least one character communicating using sign language to translate the sign language into a language other than the sign language, and to generate the alternative visual cues based on the translation of the sign language into the language other than the sign language. This approach can be advantageous, since it can allow examples of the present technique to be implemented when playing a game which was not necessarily developed with alternative visual cues in mind.

In some examples, the processing circuitry may be arranged to alter the generation of the image either to bring the signing character's hands into view or to add an alternative visual representation. In other examples, however, the processing circuitry may select between different methods of adjusting the generation of the image based on one or more factors. For example, the selection could be based on whether or not it is possible / suitable to adjust the image to bring the character's hands into view. For example, if the issue is detected during a cut scene, there may not be an alternative version of a cut scene that can be used and hence it may be more appropriate to use alternative visual cues than to reframe the scene. In another example, the player may be focussing on a particular puzzle or challenge that requires their attention, and hence it may be inappropriate to move the camera to focus on the signing character's hands.

In other examples, the selection of how to adjust the generation of the image could instead (or in addition) be based on a mode or setting set by a user. For example, a user could select between a mode in which the alternative visual cues are favoured, and a different mode in which bringing the character's hands into view is favoured.

Hence, the processing circuitry is responsive to determining that the scene comprises the at least one character communicating using sign language to determine, based on the plurality of game assets, whether the at least one hand of the at least one character can be displayed in the image, and in response to determining that the at least one hand of the at least one character cannot be displayed in the image, adjust the generation of the image to include the alternative visual cues representing the communication of the at least one character. Whichever option is chosen, adjusting the generation of the image can improve implementation of signing characters in a video game.

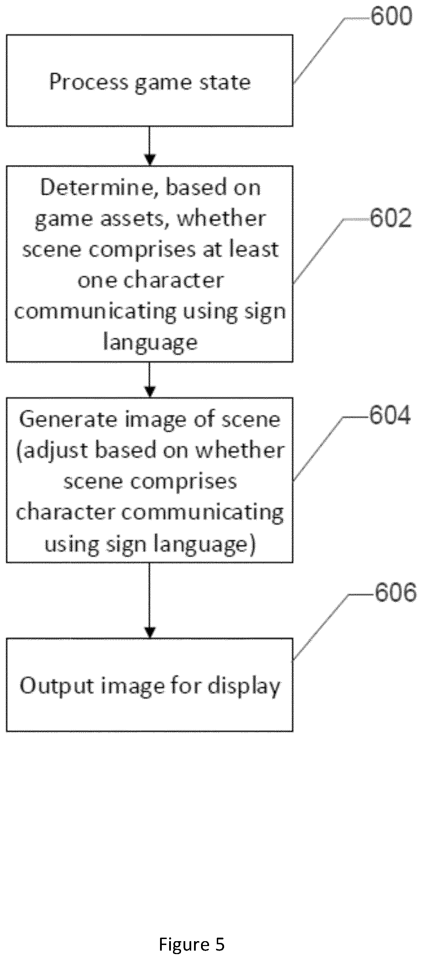

Figure 5 is a flow diagram illustrating an example method of the present technique. The method includes steps of:
- processing 600 a game state of a game;
- determining 602, based on the plurality of game assets, whether the scene comprises at least one character communicating using sign language;
- generating 604, based on a plurality of game assets, an image of a scene, the generation of the image being adjusted in dependence on whether the scene comprises the at least one character communicating using sign language; and
- outputting 606 the image for display.

The method shown in Figure 5 could be performed by an entertainment device such as those illustrated in Figure 1. However, in particular examples, the method could be performed by a general purpose computer under the control of a computer program comprising instructions which, when executed by a computer, cause the computer to perform the above method. Such a computer program could be stored on a computer-readable storage medium, which could be transitory or non-transitory.

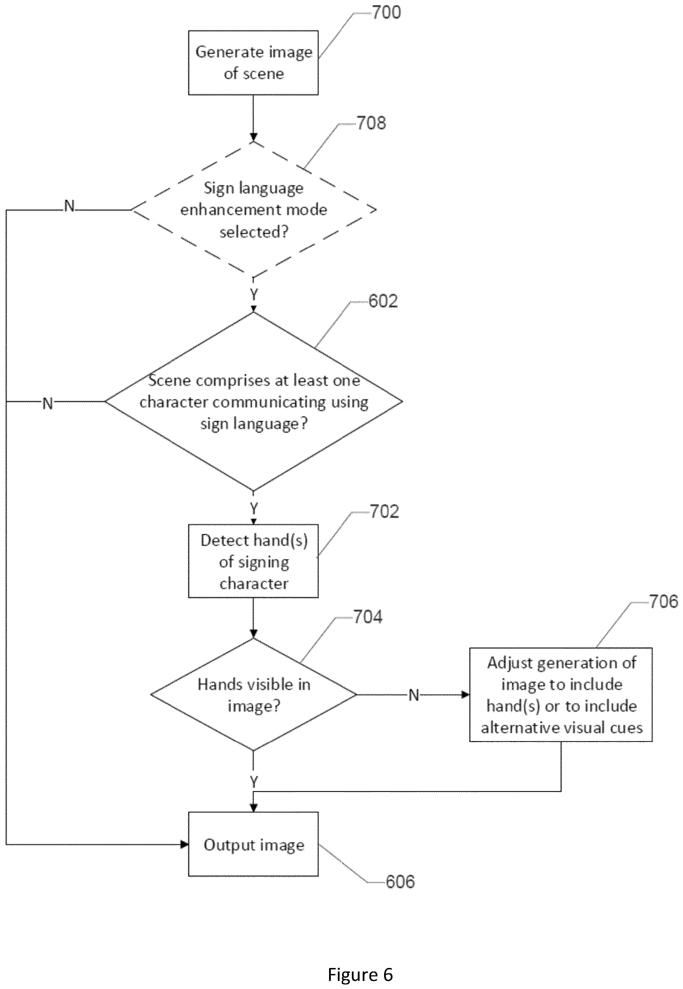

Figure 6 is another flow diagram illustrating an example method of the present technique. The method includes generating 700 an image of a scene and determining 602 whether the scene comprises at least one character communicating using sign language. If it is determined ("N" branch from step 602) that the scene does not comprise any characters communicating using sign language, the method proceeds to a step 606 of outputting the image. If, on the other hand, it is determined ("Y" branch from step 602) that the scene does contain one or more characters using sign language, the method comprises detecting 702 a hand or hands of the signing character, and it is determined 704 whether the hand or hands are visible in the generated image. If it is determined ("Y" branch from step 704) that the hand(s) are visible in the image, no adjustment to the image is needed and the image can be output 606. If, on the other hand, it is determined ("N" branch from step 704) that the hand or hands are not visible in the image, the generation of the image is adjusted 706 to include the hand/hands or alternative visual cues.

Optionally, the method may also include a step 708 of determining whether or not a sign language enhancement mode has been selected (e.g. set by a user). When it is determined ("N" branch from step 708) that the sign language enhancement mode has not been selected, the method may skip steps 602, 702, 704 and 706 and proceed straight to outputting the image 606 without making any adjustments. If, on the other hand, it is determined ("Y" branch from step 708) that the sign language enhancement mode has been selected, the method may proceed with steps 602 onwards as usual.

Hence, in some examples, the processing circuitry is configured to operate in a mode selected from a plurality of modes, the plurality of modes comprising a sign language enhancement mode, and a sign language non-enhancement mode. The processing circuitry may be responsive to determining that the scene comprises the at least one character communicating using sign language to adjust the generation of the image in dependence on whether the processing circuitry is operating in the sign language enhancement mode or the sign language non-enhancement mode. For example, the processing circuitry may be responsive, when operating in the sign language enhancement mode, to determining that the scene comprises the at least one character communicating using sign language to adjust the generation of the image in dependence on whether communication by the at least one character as displayed in the image is determined to be understandable without use of audible cues. On the other hand, the processing circuitry may be responsive, when operating in the sign language non-enhancement mode, to determining that the scene comprises the at least one character communicating using sign language to adjust the generation of the image independent of whether communication by the at least one character as displayed in the image is determined to be understandable without use of audible cues.

It will be appreciated that in any event, the fact that a scene comprises a character communicating using sign language may be detected in a number of ways. One is whether a character has dialogue whilst a sign language enhancement mode is active. Another is whether an animation sequence (i.e. for sign language) or other sign-language specific asset or routine has been requested for a character.

Similarly it will be appreciated that detection/identification of the characters hand(s) in the rendered image can be determined during the render pipeline process - the hands (e.g. the hand mesh and/or the hand texture) can be detected as not being rendered (or rendered with occlusion) when assembling the assets within the rendered field of view and during a z-culling step. Optionally the rendered image itself may be analysed for the presence of the character's hands, although this is computationally more expensive.

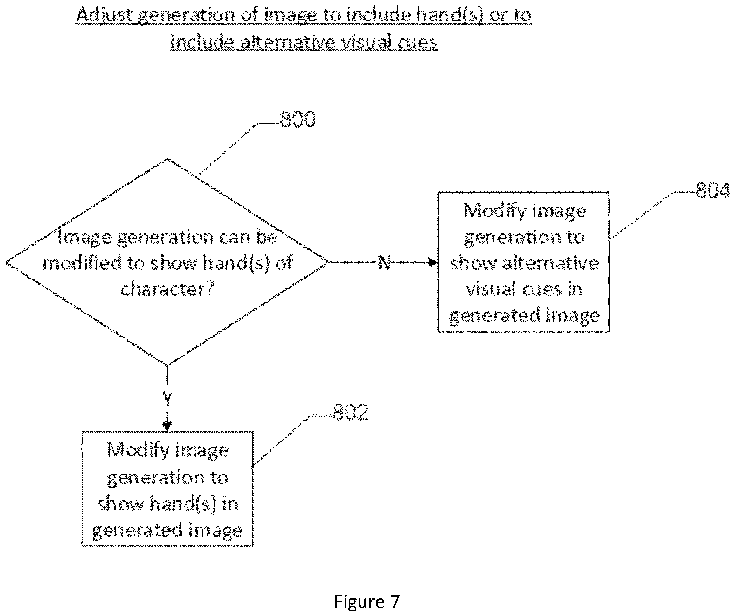

Figure 7 is another flow diagram illustrating an example method of the present technique. In particular, Figure 7 shows an example of a method for determining how to adjust the generation of an image by the processing circuitry. As shown in the figure, the method comprises determining 800 whether the generation of the image can be modified such that the hand or hands of the signing character are visible. In response to determining that this is possible, the generation of the image is modified 802 to bring the hand/hands into the image. On the other hand, in response to determining that it is not possible to modify the generation of the image in such a way, the generation of the image is instead modified to show the alternative visual cues in the image.

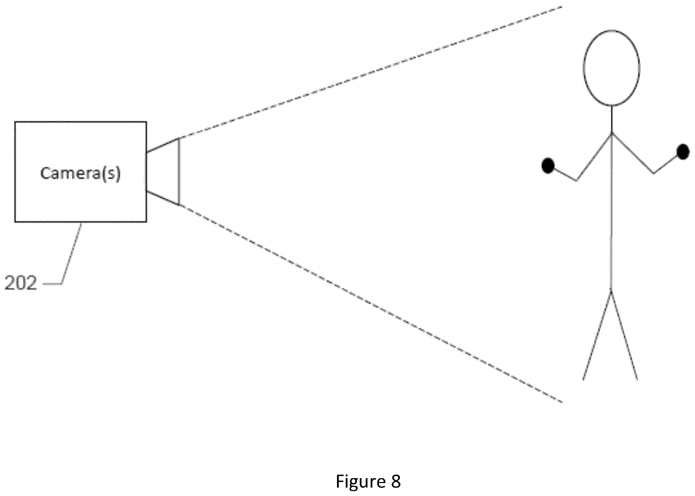

As noted above, the entertainment system could comprise one or more cameras. These cameras may be useable to capture images of a player playing the game, as shown in Figure 8. In particular examples of the present technique, the processing circuitry of the entertainment device may be arranged to analyse the images captured by the one or more cameras to determine whether the player is using sign language and, optionally, to interpret or translate any sign language used by the player. This can allow the player to communicate using sign language when playing a game, which may be more natural to some players than using other forms of communication such as text.

Hence, some examples of the entertainment system comprise at least one camera to capture images of a player, and the processing circuitry is configured to determine, based on the captured images, whether the player is communicating using sign language, and process the game state of the game in dependence on whether it is determined that the player is communicating using sign language.

In an example embodiment of the present invention, the methods and techniques herein may at least partly be implemented using a supervised machine learning model.

The supervised learning model is trained using labelled training data to learn a function that maps inputs (typically provided as feature vectors) to outputs (i.e. labels). The labelled training data comprises pairs of inputs and corresponding output labels. The output labels are typically provided by an operator to indicate the desired output for each input. The supervised learning model processes the training data to produce an inferred function that can be used to map new (i.e. unseen) inputs to a label.

The input data (during training and/or inference) may comprise various types of data, such as numerical values, images, video, text, or audio. Raw input data may be pre-processed to obtain an appropriate feature vector used as input to the model - for example, features of an image or audio input may be extracted to obtain a corresponding feature vector. It will be appreciated that the type of input data and techniques for pre-processing of the data (if required) may be selected based on the specific task the supervised learning model is used for.

Once prepared, the labelled training data set is used to train the supervised learning model. During training the model adjusts its internal parameters (e.g. weights) so as to optimize (e.g. minimize) an error function, aiming to minimize the discrepancy between the model's predicted outputs and the labels provided as part of the training data. In some cases, the error function may include a regularization penalty to reduce overfitting of the model to the training data set.

The supervised learning model may use one or more machine learning algorithms in order to learn a mapping between its inputs and outputs. Example suitable learning algorithms include linear regression, logistic regression, artificial neural networks, decision trees, support vector machines (SVM), random forests, and the K-nearest neighbour algorithm.

Once trained, the supervised learning model may be used for inference - i.e. for predicting outputs for previously unseen input data. The supervised learning model may perform classification and/or regression tasks. In a classification task, the supervised learning model predicts discrete class labels for input data, and/or assigns the input data into predetermined categories. In a regression task, the supervised learning model predicts labels that are continuous values.

In some cases, limited amounts of labelled data may be available for training of the model (e.g. because labelling of the data is expensive or impractical). In such cases, the supervised learning model may be extended to further use unlabelled data and/or to generate labelled data.

Considering using unlabelled data, the training data may comprise both labelled and unlabelled training data, and semi-supervised learning may be used to learn a mapping between the model's inputs and outputs. For example, a graph-based method such as Laplacian regularization may be used to extend a SVM algorithm to Laplacian SVM in order to perform semi-supervised learning on the partially labelled training data.

Considering generating labelled data, an active learning model may be used in which the model actively queries an information source (such as a user, or operator) to label data points with the desired outputs. Labels are typically requested for only a subset of the training data set thus reducing the amount of labelling required as compared to fully supervised learning. The model may choose the examples for which labels are requested - for example, the model may request labels for data points that would most change the current model, or that would most reduce the model's generalization error. Semi-supervised learning algorithms may then be used to train the model based on the partially labelled data set.

Therefore, for example, processing circuitry of the entertainment device described in examples herein may be configured to execute a machine learning algorithm to generate an inference, based on input data dependent on the plurality of assets, and determine, based on the inference, whether the scene comprises at least one character communicating using sign language. The processing circuitry may be configured to translate, based on the inference, the sign language into a language other than the sign language, and the input data may be generated based on the plurality of game assets.

The processing circuitry may be configured to train, during a training phase, the machine learning algorithm using labelled training data, the labelled training data comprising game assets and associated labels indicating whether the game assets represent scenes comprising one or more characters communicating using sign language.

In addition, the processing circuitry may be configured to execute a machine learning algorithm to generate, based on input data dependent on the captured images, an inference, and determine, based on the inference, whether the player is communicating using sign language. The processing circuitry could then be configured to translate, based on the inference, the sign language used by the player into a language other than the sign language.

In conclusion, if text-to-sign language was implemented for characters in a game, there might be issues when a character's hands are not in-frame (e.g. if there is a close-up during a cut scene, or if the player camera is not directed towards the character's hands). The examples above show how - using ML or heuristics for example - one can detect when this occurs, and either display subtitles at these points, move the camera so that the character's hands are in frame, or have a character pop up on the side of the screen (e.g. like sign language interpreters on TV) and sign. The above examples also note that particular examples could use ML to watch and translate a player's sign language, so that the player can communicate with NPCs and other players using sign language (even if those players do not know sign language).

Examples of the present technique are set out in the following clauses:
(1) An entertainment device comprising:
   processing circuitry to process a game state of a game and to generate, based on a plurality of game assets, an image of a scene; and
   output circuitry to output the image for display,
   wherein:
      the processing circuitry is configured to determine, based on the plurality of game assets, whether the scene comprises at least one character communicating using sign language; and
      the processing circuitry is configured to adjust the generation of the image in dependence on whether the scene comprises the at least one character communicating using sign language.
(2) The entertainment device of clause 1, wherein
   the processing circuitry is responsive to determining that the scene comprises the at least one character communicating using sign language to adjust the generation of the image in dependence on whether communication by the at least one character as displayed in the image is determined to be understandable without use of audible cues.
(3) The entertainment device of clause 1 or clause 2, wherein
   the processing circuitry is responsive to determining that the scene comprises the at least one character communicating using sign language to:
   identify at least one hand of the at least one character; and
   adjust the generation of the image in dependence on the identification of the at least one hand.
(4) The entertainment device of clause 3, wherein
   the processing circuitry is responsive to determining that the scene comprises the at least one character communicating using sign language to adjust the generation of the image to include at least one of:
   the at least one hand of the at least one character; and
   alternative visual cues representing the communication of the at least one character.
(5) The entertainment device of clause 4, wherein
   the processing circuitry is responsive to determining that the scene comprises the at least one character communicating using sign language to:
   determine, based on the plurality of game assets, whether the at least one hand of the at least one character can be displayed in the image; and
   in response to determining that the at least one hand of the at least one character cannot be displayed in the image, adjust the generation of the image to include the alternative visual cues representing the communication of the at least one character.
(6) The entertainment device of clause 4 or clause 5, wherein
   the processing circuitry is responsive to determining that the scene comprises the at least one character communicating using sign language to adjust the generation of the image to include, as the alternative visual cues, subtitles representing the communication of the at least one character.
(7) The entertainment device of any of clauses 4 to 6, wherein
   the processing circuitry is responsive to determining that the scene comprises the at least one character communicating using sign language to adjust the generation of the image to include, as the alternative visual cues, an interpreting character performing the sign language.
(8) The entertainment device of any of clauses 4 to 7, wherein
   the processing circuitry is responsive to determining that the scene comprises the at least one character communicating using sign language to:
   translate the sign language into a language other than the sign language; and
   generate the alternative visual cues based on the translation of the sign language into the language other than the sign language.
(9) The entertainment device of any preceding clause, wherein
   the processing circuitry is configured to adjust the generation of the image by moving the character within the virtual environment toward a position where at least one hand of the character is visible within the generated image.
(10) The entertainment device of any preceding clause, wherein
   the processing circuitry is configured to operate in a mode selected from a plurality of modes, the plurality of modes comprising:
   a sign language enhancement mode; and
   a sign language non-enhancement mode, and
   the processing circuitry is responsive to determining that the scene comprises the at least one character communicating using sign language to adjust the generation of the image in dependence on whether the processing circuitry is operating in the sign language enhancement mode or the sign language non-enhancement mode.
(11) The entertainment device of clause 10, wherein:
   the processing circuitry is responsive, when operating in the sign language enhancement mode, to determining that the scene comprises the at least one character communicating using sign language to adjust the generation of the image in dependence on whether communication by the at least one character as displayed in the image is determined to be understandable without use of audible cues; and
   the processing circuitry is responsive, when operating in the sign language non-enhancement mode, to determining that the scene comprises the at least one character communicating using sign language to adjust the generation of the image independent of whether communication by the at least one character as displayed in the image is determined to be understandable without use of audible cues.
(12) The entertainment device of any preceding clause, wherein
   the processing circuitry is configured to:
   execute a machine learning algorithm to generate an inference, based on input data dependent on the plurality of assets; and
   determine, based on the inference, whether the scene comprises at least one character communicating using sign language.
(13) The entertainment deice of clause 12, wherein
   the processing circuitry is configured to translate, based on the inference, the sign language into a language other than the sign language.
(14) The entertainment device of clause 12 or clause 13, wherein
   the processing circuitry is configured to generate, based on the plurality of game assets, the input data.
(15) The entertainment device of any of clauses 12 to 14, wherein
   the processing circuitry is configured to train, during a training phase, the machine learning algorithm using labelled training data, the labelled training data comprising game assets and associated labels indicating whether the game assets represent scenes comprising one or more characters communicating using sign language.
(16) An entertainment system comprising:
   the entertainment device of any preceding clause; and
   a display screen to display the image of the scene.
(17) The entertainment system of clause 16, comprising:
   at least one camera to capture images of a player,
   wherein the processing circuitry is configured to:
      determine, based on the captured images, whether the player is communicating using sign language; and
      process the game state of the game in dependence on whether it is determined that the player is communicating using sign language.
(18) The entertainment system of clause 17, wherein:
   the processing circuitry is configured to:
   execute a machine learning algorithm to generate, based on input data dependent on the captured images, an inference; and
   determine, based on the inference, whether the player is communicating using sign language.
(19) The entertainment system of clause 18, wherein:
   the processing circuitry is configured to translate, based on the inference, the sign language used by the player into a language other than the sign language.
(20) A method comprising:
   processing a game state of a game;
   generating, based on a plurality of game assets, an image of a scene;
   determining, based on the plurality of game assets, whether the scene comprises at least one character communicating using sign language;
   adjusting the generation of the image in dependence on whether the scene comprises the at least one character communicating using sign language; and
   outputting the image for display.
(21) A computer program comprising instructions which, when executed by a computer, cause the computer to perform the method of clause 20.
(22) A computer-readable storage medium to store the computer program of clause 21.

## Claims

1. An entertainment device comprising:
processing circuitry to process a game state of a game and to generate, based on a plurality of game assets, an image of a scene; and
output circuitry to output the image for display,
wherein:
the processing circuitry is configured to determine, based on the plurality of game assets, whether the scene comprises at least one character communicating using sign language; and
the processing circuitry is configured to adjust the generation of the image in dependence on whether the scene comprises the at least one character communicating using sign language.

2. The entertainment device of claim 1, wherein
the processing circuitry is responsive to determining that the scene comprises the at least one character communicating using sign language to adjust the generation of the image in dependence on whether communication by the at least one character as displayed in the image is determined to be understandable without use of audible cues.

3. The entertainment device of claim 1 or claim 2, wherein
the processing circuitry is responsive to determining that the scene comprises the at least one character communicating using sign language to:
identify at least one hand of the at least one character; and
adjust the generation of the image in dependence on the identification of the at least one hand.

4. The entertainment device of claim 3, wherein
the processing circuitry is responsive to determining that the scene comprises the at least one character communicating using sign language to adjust the generation of the image to include at least one of:
the at least one hand of the at least one character; and
alternative visual cues representing the communication of the at least one character.

5. The entertainment device of claim 4, wherein
the processing circuitry is responsive to determining that the scene comprises the at least one character communicating using sign language to:
determine, based on the plurality of game assets, whether the at least one hand of the at least one character can be displayed in the image; and
in response to determining that the at least one hand of the at least one character cannot be displayed in the image, adjust the generation of the image to include the alternative visual cues representing the communication of the at least one character.

6. The entertainment device of claim 4 or claim 5, wherein
the processing circuitry is responsive to determining that the scene comprises the at least one character communicating using sign language to perform one or more selected from the list consisting of:
i. adjust the generation of the image to include, as the alternative visual cues, subtitles representing the communication of the at least one character;
ii. adjust the generation of the image to include, as the alternative visual cues, an interpreting character performing the sign language; and
iii. translate the sign language into a language other than the sign language, and generate the alternative visual cues based on the translation of the sign language into the language other than the sign language.

7. The entertainment device of any preceding claim, wherein
the processing circuitry is configured to adjust the generation of the image by moving the character within the virtual environment toward a position where at least one hand of the character is visible within the generated image.

8. The entertainment device of any preceding claim, wherein
the processing circuitry is configured to operate in a mode selected from a plurality of modes, the plurality of modes comprising:
a sign language enhancement mode; and
a sign language non-enhancement mode, and
the processing circuitry is responsive to determining that the scene comprises the at least one character communicating using sign language to adjust the generation of the image in dependence on whether the processing circuitry is operating in the sign language enhancement mode or the sign language non-enhancement mode.

9. The entertainment device of claim 8, wherein:
the processing circuitry is responsive, when operating in the sign language enhancement mode, to determining that the scene comprises the at least one character communicating using sign language to adjust the generation of the image in dependence on whether communication by the at least one character as displayed in the image is determined to be understandable without use of audible cues; and
the processing circuitry is responsive, when operating in the sign language non-enhancement mode, to determining that the scene comprises the at least one character communicating using sign language to adjust the generation of the image independent of whether communication by the at least one character as displayed in the image is determined to be understandable without use of audible cues.

10. The entertainment device of any preceding claim, wherein
the processing circuitry is configured to:
execute a machine learning algorithm to generate an inference, based on input data dependent on the plurality of assets; and
determine, based on the inference, whether the scene comprises at least one character communicating using sign language.

11. The entertainment deice of claim 10, wherein
the processing circuitry is configured to translate, based on the inference, the sign language into a language other than the sign language.

12. An entertainment system comprising:
the entertainment device of any preceding claim; and
a display screen to display the image of the scene.

13. The entertainment system of claim 12, comprising:
at least one camera to capture images of a player,
wherein the processing circuitry is configured to:
determine, based on the captured images, whether the player is communicating using sign language; and
process the game state of the game in dependence on whether it is determined that the player is communicating using sign language.

14. The entertainment system of claim 13, wherein:
the processing circuitry is configured to:
execute a machine learning algorithm to generate, based on input data dependent on the captured images, an inference; and
determine, based on the inference, whether the player is communicating using sign language.

15. The entertainment system of claim 14, wherein:
the processing circuitry is configured to translate, based on the inference, the sign language used by the player into a language other than the sign language.

16. A method comprising:
processing a game state of a game;
generating, based on a plurality of game assets, an image of a scene;
determining, based on the plurality of game assets, whether the scene comprises at least one character communicating using sign language;
adjusting the generation of the image in dependence on whether the scene comprises the at least one character communicating using sign language; and
outputting the image for display.

17. A computer program comprising instructions which, when executed by a computer, cause the computer to perform the method of claim 16.
